(19) Europäisches Patentamt
European Patent Office
Office européen des brevets

(11) Veröffentlichungsnummer: **0 087 113**
**B1**

(12) # EUROPÄISCHE PATENTSCHRIFT

(45) Veröffentlichungstag der Patentschrift: **03.09.86**

(51) Int. Cl.⁴: **C 09 B 62/09**, C 09 B 62/513, D 06 P 3/10, D 06 P 3/66

(21) Anmeldenummer: **83101453.5**

(22) Anmeldetag: **16.02.83**

(54) **Wasserlösliche Disazoverbindungen, Verfahren zu deren Herstellung und ihre Verwendung als Farbstoffe.**

(30) Priorität: **19.02.82 DE 3205945**

(43) Veröffentlichungstag der Anmeldung: **31.08.83 Patentblatt 83/35**

(45) Bekanntmachung des Hinweises auf die Patenterteilung: **03.09.86 Patentblatt 86/36**

(84) Benannte Vertragsstaaten: **CH DE FR GB IT LI**

(56) Entgegenhaltungen: **CHEMICAL ABSTRACTS, Band 96, Nr. 8, 22. Februar 1982, Seite 88, Nr. 53819n, Columbus, Ohio, USA**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Meininger, Fritz, Dr., Loreleistrasse 7, D-6230 Frankfurt am Main 80 (DE)**
Erfinder: **Schläfer, Ludwig, Dr., Königsberger Strasse 40, D-6233 Kelkheim (Taunus) (DE)**

**EP 0 087 113 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die Erfindung liegt auf dem Gebiet der faserreaktiven Disazofarbstoffe.

Aus der europäischen Patentanmeldungsveröffentlichung Nr. 00 22 265 A sind Disazofarbstoffe bekannt, die aus der 1-Amino-8-naphthol-3, 6-disulfonsäure als bivalenter Kupplungskomponente, einer auf diese sauer angekuppelten Anilinverbindung als erster Diazokomponente und einer Phenylendiaminosulfonsäure-Verbindung als zweiter Diazokomponente, an deren zweiter Aminogruppe ein mit einem faserreaktiven Anilinrest der Vinylsulfonreihe verbundener Chlortriazinylrest gebunden ist, aufgebaut sind. Diese Disazofarbstoffe zeigen jedoch gewisse Mängel.

Desweiteren sind aus der japanischen Patentanmeldungs-Veröffentlichung Sho-56-128380 Disazofarbstoffe beschrieben, die aus einer 1-Amino-8-naphthol-3, 6- oder -4, 6-disulfon-säure als bivalenter Kupplungskomponente, einer auf diese sauer angekuppelten 2-Aminonaphthalin-1, 5-disulfonsäure als erster Diazokomponente und der 1, 3-Phenylendiamin-4-sulfon-säure als zweiter Diazokomponente, an deren zweiter Aminogruppe ein mit einem faserreaktiven Anilinrest der Vinylsulfonreihe verbundener Chlortriazinylrest gebunden ist, aufgebaut sind. Diese Disazofarbstoffe besitzen teilweise einen guten Fixiergrad auf Baumwolle im Ausziehverfahren, der jedoch nicht vollauf befriedrigt.

Es wurden nunmehr neue, wertvolle und vorteilhafte wasserlösliche Disazoverbindungen entsprechend der allgemeinen Formel (1)

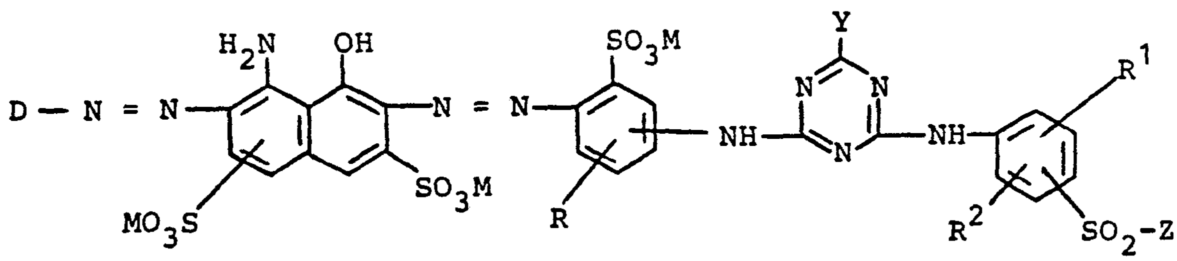

(1)

gefunden. In dieser bedeuten:

M ist ein Wasserstoffatom oder das Äquivalent eines Metalls, vorzugsweise eines ein- oder zweiwertigen Metalls, wie Alkali- oder Erdalkalimetalls, insbesondere des Natriums, Kaliums oder Calciums;

R ist ein Wasserstoffatom, eine Alkylgruppe von 1 bis 4 C-Atomen, wie Äthylgruppe und insbesondere Methylgruppe, eine Alkoxygruppe von 1 bis 4 C-Atomen, wie die Äthoxygruppe und insbesondere die Methoxygruppe, oder eine Sulfogruppe (entsprechend der allgemeinen Formel $-SO_3M$ mit M der obengenannten Bedeutung);

D ist ein Rest der Formel (4a)

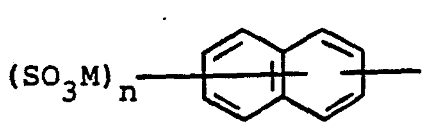

(4a)

in welcher M die obengenannte Bedeutung hat und

n für die Zahl 1, 2 oder 3 steht,

jedoch im Falle, daß die Triazinylaminogruppe an den Benzolkern in para-Stellung zur angezeigten Gruppe $-SO_3M$ gebunden ist und R gleichzeitig für ein Wasserstoffatom steht,

D der 3-Sulfo-1-naphthyl-, 4-Sulfo-1-naphthyl-, 6-Sulfo-1-naphthyl-, 7-Sulfo-1-naphthyl-, 3, 6-Disulfo-1-naphthyl-, 3, 7-Disulfo-1-naphthyl-, 4, 6-Disulfo-1-naphthyl-, 4, 7-Disulfo-1-naphthyl-, 5, 7-Disulfo-1-naphthyl-, 3, 5, 7-Trisulfo-1-naphthyl-, 3, 6, 8-Trisulfo-1-naphthyl-, 4, 6, 8-Trisulfo-1-naphthyl-, 5-Sulfo-2-naphthyl-, 6-Sulfo-2-naphthyl-, 7-Sulfo-2-naphthyl-, 8-Sulfo-2-naphthyl-, 3, 6-Disulfo-2-naphthyl-, 5, 7-Disulfo-2-naphthyl-, 6, 8-Disulfo-2-naphthyl- oder der 4, 6, 8-Trisulfo-2-naphthyl-Rest ist;

die eine Sulfogruppe der Formel $MO_3S$- im Aminonaphtholrest steht in meta- oder para-Stellung zur Aminogruppe an den Naphthalinkern gebunden;

$R^1$ ist ein Wasserstoffatom, eine Alkylgruppe von 1 bis 4 C-Atomen, wie die Äthylgruppe und insbesondere die Methylgruppe, eine Alkoxygruppe von 1 bis 4 C-Atomen, wie die Äthoxygruppe und insbesondere die Methoxygruppe, oder ein Chloratom;

$R^2$ ist ein Wasserstoffatom, eine Alkylgruppe von 1 bis 4 C-Atomen, wie die Äthylgruppe und insbesondere

die Methylgruppe, eine Alkoxygruppe von 1 bis 4 C-Atomen, wie die Äthoxygruppe und insbesondere die Methoxygruppe, oder ein Chloratom;

Y ist ein Chloratom oder ein Fluoratom;

Z ist die Vinylgruppe oder eine β-Sulfatoethyl-Gruppe (entsprechend der allgemeinen Formel $-CH_2-CH_2-OSO_3M$ mit M der obengenannten Bedeutung).

Die obigen Formelglieder können zueinander gleiche oder voneinander verschiedene Bedeutungen besitzen.

Die erfindungsgemäßen Disazoverbindungen können in Form ihrer freien Säure und bevorzugt in Form ihrer Salze, insbesondere neutralen Salze, vorliegen; als Salze sind insbesondere die Alkalimetall- und Erdalkalimetallsalze zu nennen, so beispielsweise die Natrium-, Kalium- und Calciumsalze. Die neuen Verbindungen finden bevorzugt in Form dieser Salze ihre Verwendung zum Färben (in allgemeinen Sinne und einschließlich des Bedruckens verstanden) von hydroxy- und/oder carbonamidgruppenhaltigem Material.

Die Vorliegende Erfindung betrifft weiterhin ein Verfahren zur Herstellung dieser erfindungsgemäßen Disazoverbindungen. Dieses ist dadurch gekennzeichnet, daß man eine Monoazoverbindung der allgemeinen Formel (2)

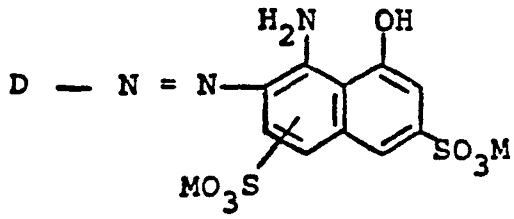

(2)

in welcher D und M die obengenannten Bedeutungen haben,mit dem Diazoniumsalz einer Aminoverbindung der allgemeinen Formel (3)

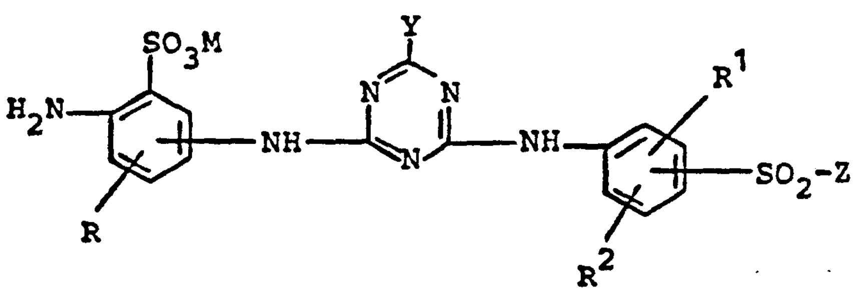

(3)

in welcher M, R, $R^1$, $R^2$, Y und Z die obengenannten Bedeutungen haben, kuppelt.

Die Kupplungsreaktion nach dem erfindungsgemäßen Verfahren erfolgt analog bekannten Verfahrensweisen, so beispielsweise in wäßrigem Medium im schwach sauren bis schwach alkalischen Bereich, vorzugsweise bei einem pH-Wert zwischen 3 und 8, insbesondere zwischen 4 und 7. Die als Ausgangsverbindung dienende Monoazoverbindung der allgemeinen Formel (2) wird in bekannter Weise durch Umsetzung des Diazoniumsalzes einer Aminonaphthalin-mono-, -di- oder -trisulfonsäure entsprechend der allgemeinen Formel (4)

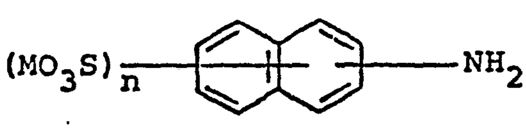

(4)

in welcher M und n die obengenannten Bedeutungen haben, mit der 1-Amino-8-naphthol-3, 6- oder -4, 6-disulfonsäure in saurem Medium, wie bei einem pH-Wert zwischen 0 und 3, hergestellt. Solche Verfahrensweisen der Kupplung sind beispielsweise aus den deutschen Patentschriften 960 534 und 1 644 198 bekannt.

Ausgangsverbindungen der allgemeinen Formel (4) sind beispielsweise 1-Aminonaphthalin-4-sulfonsäure, 1-Aminonaphthalin-5-sulfonsäure, 1-Aminonaphthalin-6-sulfonsäure, 1-Aminonaphthalin-7-sulfonsäure, 1-Aminonaphthalin-3, 6-disulfonsäure, 1-Aminonaphthalin-3, 7-disulfonsäure, 1-Aminonaphthalin-4, 6-disulfonsäure, 1-Aminonaphthalin-4, 7-disulfonsäure, 1-Aminonaphthalin-3, 5, 7-trisulfonsäure, 1-Aminonaphthalin-3, 6, 8-trisulfonsäure, 2-Aminonaphthalin-5-sulfonsäure, 2-Aminonaphthalin-6-sulfonsäure, 2-Amino-naphthalin-7-sulfonsäure, 2-Aminonaphthalin-8-sulfonsäure, 2-Aminonaphthalin-3, 6-disulfonsäure, 2-Aminonaphthalin-4, 8-disulfonsäure, 2-Aminonaphthalin-5, 7-disulfonsäure, 2-Aminonaphthalin-6, 8-disulfonsäure, 2-Aminonaphthalin-3, 6, 8-trisulfonsäure, 2-Aminonaphthalin-4, 6, 8-trisulfonsäure und bevorzugt 2-Aminonaphthalin-1-sulfonsäure und 2-Aminonaph-thalin-1, 5-disulfonsäure.

Die als Ausgangsverbindungen in dem erfindungsgemäßen Verfahren dienenden Aminoverbindungen entsprechend der allgemeinen Formel (3) lassen sich analog bekannten, beispielsweise in den Europäischen Offenlegungsschriften Nrs. 00 32 187, 00 36 133, 00 36 582 und 00 40 806 beschriebenen Verfahrensweisen durch Umsetzung von Cyanurchlorid oder Cyanurfluorid (2, 4, 6-Trichlor- bzw. 2, 4, 6-Trifluor-1, 3, 5-triazin) zunächst mit einer Aminoverbindung der allgemeinen Formel (5)

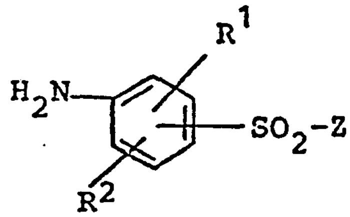

(5)

in welcher R¹, R und Z die obengenannten Bedeutungen haben, und anschließend mit einer Phenylendiamino-Verbindung der allgemeinen Formel (6)

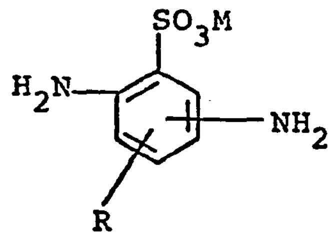

(6)

in welcher M und R die obengenannten Bedeutungen haben, herstellen.

So kann beispielsweise die Umsetzung des Cyanurchlorids in der ersten Kondensationsstufe mit dem Amin der allgemeinen Formel (5) in wäßrigem Medium oder wäßrig-organischem Medium unter Zusatz säurebindender Mittel, wie Alkali- oder Erdalkalicarbonaten, Alkali- oder Erdalkalihydrogencarbonaten oder -hydroxyden oder Alkaliacetaten, - wobei die Alkali- und Erdalkalimetalle vorzugsweise solche des Natriums, Kaliums und Calciums sind -, und ebenso beispielsweise tertiäre Amine, wie Pyridin, Triäthylamin oder Chinolin, erfolgen. Als Reaktionstemperatur zur Herstellung dieses primären Kondensationsproduktes wählt man den Bereich zwischen -10°C und +40°C, vorzugsweise zwischen -10°C und +30°C, insbesondere bevorzugt zwischen 0°C und +10°C, bei einem pH-Wert zwischen 0,7 und 5, vorzugsweise zwischen 1 und 3.

Die zweite Kondensationsstufe zwischen der Dichlortriazinylamino-Verbindung und der Phenylendiamino-Verbindung der allgemeinen Formel (6) kann ebenso in wäßrig-organischem Medium erfolgen; vorzugsweise führt man sie jedoch in wäßrigem Medium durch, wobei erforderlichenfalls ein säurebindendes Mittel, wie die oben angegebenen, zugesetzt wird. Als Reaktionstemperatur wählt man vorzugsweise einen Bereich zwischen 10 und 60°C, insbesondere bevorzugt zwischen 20 und 50°C, bei einem pH-Wert zwischen 2 und 8, insbesondere zwischen 3 und 6.

Die Umsetzung des Cyanurfluorids in der ersten Kondensationsstufe mit der Aminoverbindung der allgemeinen Formel (5) erfolgt analog der des Cyanurchlorids, jedoch bevorzugt in wäßrig-organischem Medium bei einer Temperatur zwischen -10°C und +20°C, insbesondere zwischen 0°C und +10°C, und bei einem pH-Wert zwischen 0,7 und 3, bevorzugt zwischen 1 und 2. Wie die Dichlortriazinylaminoverbindung kann auch die Difluortriazinylaminoverbindung aus dem Cyanurfluorid und der Aminoverbindung der allgemeinen Formel (5) mit der Phenylendiamino-Verbindung der allgemeinen Formel (6) umgesetzt werden, wobei man bevorzugt eine Reaktionstemperatur zwischen 0°C und +30°C, insbesondere zwischen 10°C und 20°C, und einen pH-Wert zwischen 2 und 6, insbesondere zwischen 4 und 5, wählt.

Als organisches Lösemittel bei diesen Kondensationsreaktionen kann zum Beispiel Aceton verwendet werden, in dem das Cyanurchlorid oder Cyanurfluorid bereits gelöst ist; es kann aber auch auf organische Lösemittel verzichtet werden.

Aminoverbindungen der allgemeinen Formel (5) sind beispielsweise 3-(β-Sulfatoäthylsulfonyl)-anilin, 3-Vinylsulfonyl-anilin, 2-Methoxy-5-(β-sulfatoäthylsulfonyl)-anilin, 2-Methoxy-5-vinylsulfonyl-anilin, 2, 5-Dimethoxy-4-(β-sulfatoäthylsulfonyl)-anilin und dessen Vinylsulfonylderivat, 2-Methoxy-4-(β-sulfatoäthylsulfonyl)-anilin und dessen Vinylsulfonylderivat, 4-Methoxy-5-(β-sulfatoäthyl-sulfonyl)-anilin und dessen Vinylsulfonylderivat, 2, 4-Dimethoxy-5-β-sulfatoäthylsulfonyl-anilin und dessen Vinylsulfonylderivat, 2-Methoxy-5-methyl-4-(β-sulfatoäthylsulfonyl)-anilin und dessen Vinylsulfonylderivat, 2-Methoxy-5-chlor-4-(β-sulfatoäthylsulfonyl)-anilin und dessen Vinylsulfonylderivat, bevorzugt jedoch das 4-(β-Sulfatoäthyl-sulfonyl)-anilin und das 4-Vinylsulfonyl-anilin.

Phenylendiamino-Verbindungen der allgemeinen Formel (6) sind beispielsweise die 1, 4-Diaminobenzol-2, 5-disulfonsäure, die 1, 4-Diaminobenzol-2, 6-disulfonsäure, 2, 5-Diamino-toluol-4-sulfonsäure, 2, 4-Diaminotoluol-5-sulfonsäure, 2, 5-Diaminoanisol-4-sulfonsäure und die 2, 4-Diaminoanisol-5-sulfonsäure, bevorzugt jedoch die 1, 3-Diaminobenzol-4-sulfonsäure und die 1, 4-Diaminobenzol-5-sulfonsäure.

Von den erfindungsgemäßen Verbindungen sind diejenigen bevorzugt, in denen die Gruppe der Formel $-SO_2-Z$ in meta-Stellung, insbesondere in para-Stellung zur Aminogruppe an den Benzolkern gebunden ist. Weiterhin sind diejenigen erfindungsgemäßen Verbindungen bevorzugt, in denen der Formelrest Z für die β-Sulfatoäthyl-Gruppe steht.

Als Einzelverbindungen können insbesondere die in den Beispielen 5, 11, 13 und 59 beschriebenen erfindungsgemäßen Disazoverbindungen hervorgehoben werden.

Die Abscheidung und Isolierung der erfindungsgemäß hergestellten Verbindungen der allgemeinen Formel (1) aus den Syntheselösungen kann nach allgemein bekannten Methoden erfolgen, so beispielsweise durch Ausfällen aus dem Reaktionsmedium mittels Elektrolyten, wie beispielsweise Natriumchlorid oder Kaliumchlorid, oder durch Eindampfen der Reaktionslösung, beispielsweise durch Sprühtrocknung, wobei dieser Reaktionslösung eine Puffersubstanz, wie beispielsweise ein Gemisch aus Mono- und Dinatriumphosphat, zugefügt werden kann. Gegebenenfalls können diese Syntheselösungen auch, gegebenenfalls nach Zusatz einer Puffersubstanz und nach eventuellem Konzentrieren, direkt als Flüssigpräparation der färberischen Verwendung zugeführt werden.

Die erfindungsgemäßen Disazoverbindungen besitzen Wertvolle Farbstoffeigenschaften, die infolge der Vinylsulfonyl- bzw. β-Sulfatoäthylsulfonyl-Gruppe und des Halogenotriazinyl-Restes faserreaktive Eigenschaften aufweisen. Die neuen Verbindungen werden bevorzugt zum Färben (im allgemeinen Sinne, einschließlich des Bedruckens) von hydroxy- und/oder carbonamidgruppenhaltigen Materialien, beispielsweise in Form von Flächengebilden, wie Papier und Leder oder von Folien, wie bspw. aus Polyamid, oder in der Masse, wie beispielsweise von Polyamid und Polyurethan, insbesondere aber von diesen Materialien in Faserform, verwendet. Die vorliegende Erfindung betrifft somit auch die Verwendung der Verbindungen der allgemeinen Formel (1) zum Färben (im obigen Sinne) dieser Materialien bzw. Verfahren zum Färben solcher Materialien in an und für sich üblichen Verfahrensweisen, bei welchen eine Verbindung der allgemeinen Formel (1) als Farbmittel eingesetzt wird. Bevorzugt kommen die Materialien in Form von Fasermaterialien zur Anwendung, insbesondere in Form von Textilfasern, wie Garnen, Wickelkörpern, Geweben und Gewirken. > droxygruppenhaltige Materialien sind natürliche, regenerierte oder synthetische hydroxygruppenhaltige Materialien, wie beispielsweise Cellulosefasermaterialien oder Celluloseregeneratmaterialien und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische Polyamide, wie Polyamid-6, 6, Polyamid-6, Polyamid-11 und Polyamid-4, und Polyurethane, insbesondere in Form der Fasern, oder natürliche Polyamide, beispielsweise Wolle und andere Tierhaare, Seide und Leder.

Die erfindungsgemäßen Disazofarbstoffe lassen sich auf den genannten Substraten, insbesondere auf den genannten Fasermaterialien, nach den für wasserlösliche Farbstoffe, insbesondere für faserreaktive Farbstoffe, bekannten Anwendungstechniken applizieren und fixieren.

So erhält man mit ihnen auf Cellulosefasern nach dem Ausziehverfahren unter Verwendung von verschiedensten säurebindenden Mitteln und gegebenenfalls unter Zugabe von neutralen Salzen, wie Natriumchlorid oder Natriumsulfat, sehr gute Farbausbeuten sowie einen ausgezeichneten Farbaufbau. Man färbt bei Temperaturen zwischen 30 und 105°C, vorzugsweise zwischen 60 und 100°C, gegebenenfalls bei Temperaturen bis zu 120°C unter Druck, gegebenenfalls in Gegenwart von üblichen Färbereihilfsmitteln, im wäßrigen Bad. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen des Farbstoffes beschleunigenden Neutralsalze können dem Bade gewünschtenfalls auch erst nach Erreichen der eigentlichen Färbetemperatur zugesetzt werden.

Nach dem Klotzverfahren werden auf Cellulosefasern ebenfalls ausgezeichnete Farbausbeuten erhalten, wobei durch Verweilen bei Raumtemperatur oder erhöhter Temperatur, beispielsweise bis zu 60°C, durch Dämpfen oder durch Trockenhitze in üblicher Weise fixiert werden kann.

Ebenfalls nach den üblichen Druckverfahren für Cellulosefasern, die einphasig - beispielsweise durch Bedrucken mit einer Natriumbicarbonat oder ein anderes säurebindendes Mittel enthaltenden Druckpaste und anschließendes Dämpfen bei 100 - 103°C, - oder zweiphasig - beispielsweise durch Bedrucken mit neutraler oder schwach saurer Druckfarbe, anschließender Fixierung entweder durch Hindurchführen durch ein heißes elektrolythaltiges alkalisches Bad oder durch Überklotzen mit einer alkalischen elektrolythaltigen Klotzflotte und anschließendem Verweilen oder Dämpfen oder Behandlung mit Trockenhitze des behandelten Materials, durchgeführt werden können, erhält man farbstarke Drucke mit gutem Stand der Konturen und einem klaren Weißfond. Der Ausfall der Drucke ist von wechselnden Fixierbedingungen nicht oder nur wenig abhängig. Sowohl in der Färberei als auch in der Druckerei sind die mit den erfindungsgemäßen Verbindungen erhaltenen Fixiergrade sehr hoch.

Neben dem üblichen Wasserdampf von 100 - 103°C kann auch überhitzter Dampf und Druckdampf von Temperaturen bis zu 160°C eingesetzt werden. Bei der Fixierung mittels Trockenhitze nach den üblichen

Thermofixierverfahren verwendet man Heißluft von 120 - 200° C.

Die säurebindenden und die Fixierung der erfindungsgemäßen Verbindungen auf den Cellulosefasern bewirkenden Mittel sind beispielsweise wasserlösliche basische Salze der Alkalimetalle und ebenfalls Erdalkalimetalle von anorganischen und organischen Säuren oder Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxyd, Kaliumhydroxyd, Natriumcarbonat, Natriumbicarbonat, Kaliumcarbonat, Natriumformiat, Natriumdihydrogenphosphat, Dinatriumhydrogenphosphat, Natriumtrichloracetat, Wasserglas und Trinatriumphosphat.

Durch die Behandlung der erfindungsgemäßen Verbindungen mit den säurebindenden Mitteln, gegebenenfalls unter Wärmeeinwirkung, werden diese chemisch an die Cellulosefaser gebunden. Insbesondere die Cellulosefärbungen zeigen nach der üblichen Nachbehandlung durch Spülen zur Entfernung von nicht fixierten Anteilen sehr gute Fabrikations- und Gebrauchsechtheiten, wie insbesondere Naßechtheiten.

Für das coloristische Verhalten der erfindungsgemäßen Verbindungen ist besonders hervorzuheben, daß sie sich durch gute Stabilität in Druckpasten und Klotzflotten, auch in Anwesenheit von Alkali, durch ein sehr gutes Ziehvermögen aus langer Flotte, durch guten Farbaufbau nach üblichen Färbe- und Druckverfahren, durch eine gleiche Farbtiefe beim Färben von Baumwolle und Regeneratcellulosefasern, durch egales Warenbild der mit ihnen hergestellten Färbungen und Drucke und ebenfalls durch einen gleichmäßigen Ausfall der Färbungen aus langer Flotte bei Zugabe verschiedener Mengen an Elektrolyten auszeichnen. Nicht fixierte Farbstoffanteile lassen sich leicht auswaschen.

Die Färbungen auf Polyurethanfasern und Polyamidfasern werden üblicherweise aus saurem Milieu ausgeführt. So kann man beispielsweise dem Färbebad Essigsäure und/oder Ammoniumsulfat oder Essigsäure und Ammoniumacetat oder Natriumacetat zufügen, um den gewünschten pH-Wert zu erzielen. Zwecks Erleichung einer guten Egalität der Färbung empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure und/oder einer Aminonaphthalinsulfonsäure und/oder auf Basis eines Umsetzungsproduktes von beispielsweise Stearylamin mit Äthylenoxyd. In der Regel wird das zu färbende Material bei einer Temperatur von etwa 40° C in das zuerst schwach alkalisch eingestellte Bad eingebracht, einige Zeit darin bewegt, das Färbebad auf einen schwach sauren, vorzugsweise schwach essigsauren pH-Wert eingestellt und die eigentliche Färbung bei einer Temperatur zwischen 30 und 105° C, vorzugsweise zwischen 60 und 100° C, durchgeführt.

Die erfindungsgemäßen Disazoverbindungen zeichnen sich durch einen hohen Fixiergrad bei dem Färben und Bedrucken von Fasermaterialien aus. Dies ist in der Praxis aus wirtschaftlichen energetischen und ökologischen Gründen von großem Nutzen, da die bessere Ausnutzung des angebotenen Farbstoffes gleichbedeutend ist mit einer energiesparenden, leichteren Auswaschbarkeit des verringerten, nicht fixierten Farbstoffanteiles und geringerer Abwasserbelastung.

Die mit den Disazoverbindungen der Formel (1) hergestellten Färbungen und Drucke zeichnen sich durch klare Nuancen aus. Insbesondere die Färbungen und Drucke auf Cellulosefasermaterialien besitzen, wie bereits erwähnt, eine hohe Farbstärke, darüber hinaus sehr gute Lichtechtheiten sowohl in trockenem als auch feuchtem Zustand, weiterhin sehr gute Waschechtheitseigenschaften, Walk-, Wasser-, Seewasser- und Säureechtheiten, ebenso sehr gute Überfärbeechtheiten, wie insbesondere sehr gute saure Überfärbeechtheiten, und sehr gute Schweißechtheiten, desweiteren eine gute Plissierechtheit, Bügelechtheit und Reibechtheit sowie Abgasechtheit. Ebenso besitzen sie eine gute Beständigkeit gegenüber chloriertem Wasser (Chlorbadewasserechtheit) und gegenüber kupferionenabgebenden Stoffen; durch die Anwendung der erfindungsgemäßen Verbindungen zum Färben von Cellulosefasermaterialien wird keine Griffverhärtung des gefärbten Materials bewirkt.

Färbepasten, Klotzflotten und Färbeflotten sowie noch nicht fixierte Drucke und Klotzfärbungen der erfindungsgemäßen Verbindungen zeigen keine Empfindlichkeit gegen saure und schwefeldioxidhaltige Gase.

Die mit den erfindungsgemäßen Verbindungen hergestellten Färbungen besitzen marineblaue bis schwarze Farbtöne; im künstlichen Licht zeigen sie in der Regel nicht den nachteiligen, unerwünschten Rotstich, der zur sog. "roten Abendfarbe" führt, da sie in der Regel geringfügig grünstichigere Nuance besitzen. Infolgedessen haben die erfindungsgemäßen Verbindungen in der Regel eine "neutrale" Abendfarbe, so daß es bei ihnen nicht erforderlich ist, sie mit einem geeigneten Nuancierfarbstoff zu verschneiden. Denn eine ausgeprägte Nuancenverschiebung unter künstlichem Licht hat für Farbstoffe mit dieser Eigenschaft den Nachteil, daß entweder ihre generelle Verwendbarkeit beschränkt wird oder daß sich ihre Anwendung kompliziert, weil Nuancierfarbstoffe zugesetzt werden müssen, um einigermaßen zufriedenstellende Färbungen zu erhalten, die unter künstlichem Licht getragen werden oder ganz allgemein unter künstlichem Licht Verwendung finden.

Die nachstehenden Beispiele dienen zur Erläuterung der Erfindung. Die formelmäßig beschriebenen Verbindungen sind in Form der freien Säuren angegeben; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen in Form der freien Säure genannten Ausgangsverbindungen als solche oder in Form ihrer Salze, vorzugsweise Alkalimetallsalze, wie Natrium- oder Kaliumsalze, in die Synthese eingesetzt werden.

Die in den Beispielen genannten Teile sind Gewichtsteile, die Pozentangaben stellen Gewichtsprozente dar, sofern nicht anders vermerkt. Gewichtsteile stehen zu Volumenteilen im Verhältnis von Kilogramm zu Liter.

**Beispiel 1**

a) Man versetzt eine neutrale Lösung von 22,3 Teilen 2-Aminonaphthalin-1-sulfonsäure in 200 Teilen Wasser mit 7 Teilen Natriumnitrit und gießt dieses Gemisch unter Rühren in ein Gemisch aus 35 Teilen einei 31 %igen wäßrigen Salzsäure und 100 Teilen Eis. Es wird eine Stunde nachgerührt und überschüssige salpetrige Säure, wie üblich, mit Amidosulfonsäure zerstört. Zu dieser Diazoniumsalzsuspension gibt man eine neutrale Lösung von 30,3 Teilen 1-Amino-8-naphthol-3, 6-disulfonsäure in 200 Teilen Wasser, stellt mit Natriumcarbonat auf einen pH-Wert zwischen 2,5 und 3 und hält diesen Wert während der gesamten Kupplungszeit ein. Die gebildete Monoazoverbindung wird nach Beendigung der Kupplungsreaktion mit Kaliumchlorid ausgesalzen und abgesaugt und sodann als feuchtes produkt in 700 Teilen Wasser gelöst.

b) Getrennt hiervon stellt man die Diazoniumsalzlösung eines Kondensationsproduktes her: Eine Lösung von 19,5 Teilen Cyanurchlorid in 100 Teilen Aceton läßt man unter gutem Rühren in ein Gemisch aus 400 Teilen Eis und Wasser fließen. Es bildet sich eine Suspension, in die man unter Rühren eine neutrale Lösung von 28,1 Teilen 4-(β-Sulfatoäthylsulfonyl)-anilin in 200 Teilen eines Eis/Wasser-Gemisches gießt, wobei man durch portionsweise Zugabe von etwa 10 Teilen Natriumbicarbonat einen pH-Wert von 3 bis 4,5 einstellt und über 2 Stunden hält. Danach setzt man zu diesem Ansatz eine neutrale Lösung von 18,8 Teilen 1, 4-Diaminobenzol-2-sulfonsäure in 200 Teilen Wasser unter Rühren hinzu und führt die Reaktion unter weiterem 10- bis 12-stündigem Rühren bei einem pH-Wert zwischen 6 und 6,5 und einer Temperatur von 25 bis 30° C fort.

c) Das unter b) hergestellte Kondensationsprodukt, das als 2. Diazokomponente dient, wird in üblicher Weise, beispielsweise direkt in der hier unter b) angefallenen Lösung diazotiert und anschließend durch Vereinigung der hier unter a) hergestellten Lösung mit der Monoazoverbindung gekuppelt, wobei man bei dieser zweiten Kupplungsreaktion einen pH-Wert von 5,5 bis 6,5 einhält.

Die Lösung der so hergestellten erfindungsgemäßen Disazoverbindung wird nach Klärung, beispielsweise mit Hilfe von Kieselgur eingedampft oder sprühgetrocknet. Man erhält 180 Teile eines schwarzen, etwa 52 % anorganische Salze enthaltenden Pulvers des Natriumsalzes der Verbindung der Formel

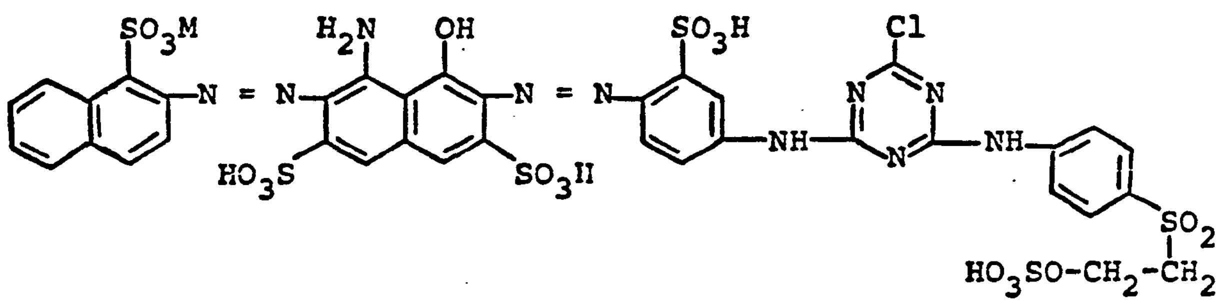

Diese erfindungsgemäße Verbindung zeigt sehr gute faser-reaktive Farbstoffeigenschaften und liefert auf den in der Beschreibung genannten Materialien, insbesondere Cellulosefasermaterialien, nach den in der Technik üblichen Färbe- und Druckverfahren für faserreaktive Farbstoffe farbstarke, stark grünstichig schwarze Färbungen und Drucke von guten Gebrauchs- und Fabrikationsechtheiten, von denen insbesondere die guten Lichtechtheiten auf trockenem und feuchtem Fasermaterial, die sehr guten Naßechtheiten, wie Waschechtheiten, Walk-, Wasser- und Seewasserechtheiten, die saure Überfärbeechtheit, saure und alkalische Schweißechtheit und Chlorbadewasserechtheit, sowie die sehr guten Bügel-, Reib- und Abgasechtheiten hervorgehoben werden können.

**Beispiel 3**

a) Man stellt in üblicher Weise eine Monoazoverbindung durch Kupplungsreaktion des Diazoniumsalzes aus 9,1 Teilen 1-Aminonaphthalin-4-sulfonsäure mit 15 Teilen 1-Amino-8-naphthol-4, 6-disulfonsäure her, wobei die Kupplung bei einem pH-Wert von 1,5 bis 2,5 durchgeführt wird, um die Azogruppe in ortho-Stellung zur Aminogruppe des Aminonaphthols einzuführen. Die Monoazoverbindung wird durch Aussalzen mit

Kaliumchlorid isoliert und abfiltriert und als feuchter Filterrückstand wieder in 500 Teilen Wasser zu einer neutralen Lösung gelöst.

b) In einem gesonderten Ansatz bereitet man die 2. Diazokomponente wie folgt: 21,3 Teile 4-(β-Sulfatoäthylsulfonyl)-anilin werden in Form einer wäßrigen neutralen Lösung (in 70 Teilen Wasser) in ein Gemisch von 14 Teilen Cyanurchlorid in 150 Teilen Eis und Wasser eingerührt. Dieses Reaktionsgemisch rührt man noch 3 bis 5 Stunden bei einem pH-Wert zwischen 4 und 5 weiter und setzt sodann 16,2 Teile 1,4-Diaminobenzol-2, 6-disulfonsäure hinzu, rührt dieses Reaktionsgemisch 10 Stunden bei einem pH-Wert zwischen 5 und 6 weiter und diazotiert sodann in üblicher Weise.

c) Zu der hier unter b) hergestellten Lösung des Diazoniumsalzes wird die hier unter a) hergestellte Lösung der Monoazoverbindung zugegeben und die zweite Kupplungsreaktion zur erfindungsgemäßen Disazoverbindung bei einem pH-Wert zwischen 6 und 8 durchgeführt.

Die erfindungsgemäße Disazoverbindung wird aus den Syntheseansatz nach dessen Klärung (beispielsweise mit Kieselgur) durch Eindampfen oder Sprühtrocknung des Filtrates isoliert oder aus ihm durch Aussalzen mit Kaliumchlorid ausgefällt. Es wird ein schwarzes, elektrolythaltiges pulver mit dem Alkalimetallsalz, wie Natrium- oder Kaliumsalz, der Verbindung der Formel

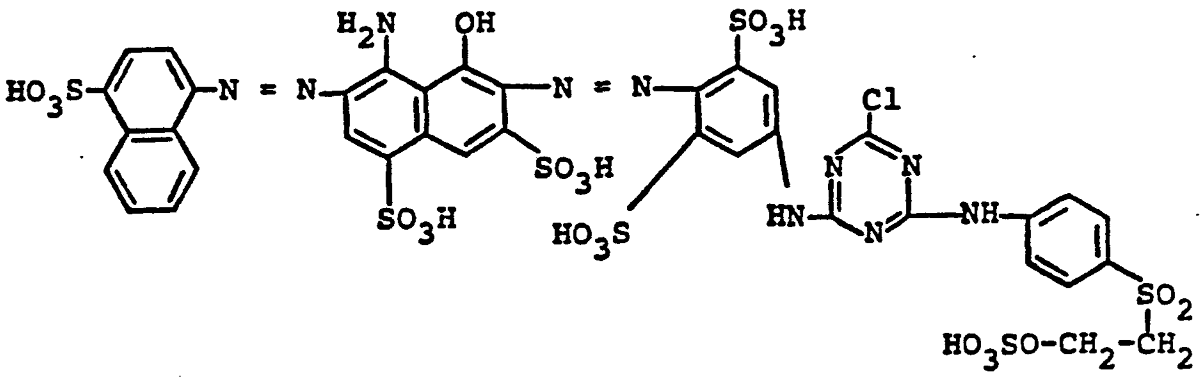

erhalten. Diese erfindungsgemäße Verbindung zeigt sehr gute faserreaktive Farbstoffeigenschaften und färbt die in der Beschreibung genannten Materialien, vorzugsweise Cellulosefasermaterialien, nach den in der Technik üblichen Färbe- und Druckmethoden, insbesondere nach den für faserreaktive Farbstoffe üblichen Applikations- und Fixiermethoden, in kräftigen, stark grünstichig marineblauen bis schwarzen Tönen in guten Fabrikations- und Gebrauchsechtheiten, von denen insbesondere die Waschechtheiten, die saure Schweißund die saure Überfärbeechtheit hervorgehoben werden können.

**Beispiele 5 bis 109**

In den nachfolgenden Tabellenbeispielen sind weitere erfindungsgemäße Disazoverbindungen mit Hilfe ihrer Komponenten (die Naphthalinsulfonsäure entsprechend der allgemeinen Formel (4) als 1. Diazokomponente und die 1-Amino-8-naphthol-disulfonsäure als "bivalente Kupplungskomponente" der Monoazoverbindung der obigen allgemeinen Formel (2) sowie die Phenylendiaminoverbindung der allgemeinen Formel (6), das Cyanurchlorid, als "(A)" bezeichnet, bzw. das Cyanurfluorid, als "(B)" bezeichnet, und die Aminoverbindung der allgemeinen Formel (5) als Komponenten der 2. Diazokomponente) beschrieben. Sie lassen sich aus diesen Komponenten in erfindungsgemäßer Weise, beispielsweise analog den obigen Ausführungsbeispielen, herstellen. Sie besitzen sehr gute faserreaktive Farbstoffeigenschaften und liefern auf den in der Beschreibung genannten Materialien, wie insbesondere Cellulosefasermaterialien, nach den in der Technik üblichen Anwendungsmethoden in der Färberei und Druckerei, vorzugsweise nach den in der Technik üblichen Applikations- und Fixiermethoden für faserreaktive Farbstoffe, farbstarke Färbungen und Drucke mit guten Echtheiten in dem in dem jeweiligen Tabellenbeispiel angegebenen Farbton.

| Bsp. | Naphthalin-sulfonsäure (4) | bivalente Kupplungs-Komponente | Phenylen-diamin (6) | Cyanur-halogenid | Aminoverbindung (5) | Farbton |
|---|---|---|---|---|---|---|
| 15 | 2-Aminonaphthalin-1,5-disulfonsäure | 1-Amino-8-naphthol-3,6-disulfonsäure | 1,4-Diaminobenzol-2,6-disulfonsäure | (A) | 4-Vinylsulfonyl-anilin | grünstichig marineblau |
| 16 | dito | 1-Amino-8-naphthol-4,6-disulfonsäure | 1,3-Diaminobenzol-4-sulfonsäure | (A) | 4-(ß-Sulfatoäthylsulfonyl)-anilin | rotstichig marineblau |
| 17 | dito | dito | 1,4-Diaminobenzol-2-sulfonsäure | (A) | dito | dito |
| 18 | dito | dito | 1,3-Diaminobenzol-4,6-disulfonsäure | (A) | dito | dito |
| 19 | dito | dito | 1,4-Diaminobenzol-2,5-disulfonsäure | (A) | dito | marineblau |
| 20 | dito | dito | 1,4-Diaminobenzol-2,6-disulfonsäure | (A) | dito | dito |
| 21 | dito | dito | 2,4-Diaminotoluol-6-sulfonsäure | (A) | dito | rotstichig marineblau |
| 22 | dito | 1-Amino-8-naphthol-3,6-disulfonsäure | dito | (A) | dito | dito |
| 23 | dito | 1-Amino-8-naphthol-4,6-disulfonsäure | dito | (A) | 4-Vinylsulfonyl-anilin | dito |
| 24 | dito | dito | 1,4-Diaminobenzol-2-sulfonsäure | (A) | dito | marineblau |
| 25 | dito | dito | 1,3-Diaminobenzol-4,6-disulfonsäure | (A) | dito | rotstichig marineblau |

| Bsp. | Naphthalin-sulfonsäure (4) | bivalente Kupplungskomponente | Phenylendiamin (6) | Cyanurhalogenid | Aminoverbindung (5) | Farbton |
|---|---|---|---|---|---|---|
| 3 | 2-Aminonaphthalin-6-sulfonsäure | 1-Amino-8-naphthol-3,6-disulfonsäure | 1,4-Diaminobenzol-2-sulfonsäure | (B) | 2,5-Dimethoxy-4-(ß-sulfatoäthylsulfonyl)-anilin | grünstichig marineblau |
| 4 | 1-Aminonaphthalin-4,6-disulfonsäure | dito | 1,3-Diaminobenzol-4-sulfonsäure | (A) | 4-(ß-Sulfatoäthylsulfonyl)-anilin | marineblau |
| 5 | dito | dito | 1,4-Diaminobenzol-2-sulfonsäure | (A) | 3-(ß-Sulfatoäthylsulfonyl)-anilin | grünstichig marineblau |
| 6 | dito | dito | dito | (A) | 4-(ß-Sulfatoäthylsulfonyl)-anilin | dito |
| 7 | dito | dito | dito | (A) | 4-Vinylsulfonyl-anilin | dito |
| 8 | dito | dito | 1,3-Diaminobenzol-4,6-disulfonsäure | (A) | 4-(ß-Sulfatoäthylsulfonyl)-anilin | marineblau |
| 9 | dito | dito | dito | (A) | 4-Vinylsulfonyl-anilin | dito |
| 10 | dito | dito | 1,4-Diaminobenzol-2,5-disulfonsäure | (A) | 3-(ß-Sulfatoäthylsulfonyl)-anilin | grünstichig marineblau |
| 11 | dito | dito | dito | (A) | 4-(ß-Sulfatoäthylsulfonyl)-anilin | dito |
| 12 | dito | dito | dito | (A) | 4-Vinylsulfonyl-anilin | dito |
| 13 | dito | dito | 1,4-Diaminobenzol-2,6-disulfonsäure | (A) | 3-(ß-Sulfatoäthylsulfonyl)-anilin | dito |
| 14 | dito | dito | dito | (A) | 4-(ß-Sulfatoäthylsulfonyl)-anilin | dito |

| Bsp. | Naphthalin-sulfonsäure (4) | bivalente Kupplungs-komponente | Phenylen-diamin (6) | Cyanur-halogenid | Aminoverbindung (5) | Farbton |
|---|---|---|---|---|---|---|
| 26 | 2-Aminonaphthalin-1,5-disulfonsäure | 1-Amino-8-naphthol-4,6-disulfonsäure | 1,4-Diaminobenzol-2,5-disulfonsäure | (A) | 4-Vinylsulfonyl-anilin | marineblau |
| 27 | dito | dito | 1,4-Diaminobenzol-2,6-disulfonsäure | (A) | dito | dito |
| | | | | | | dito |
| | | | | | | dito |
| | | | | | | dito |
| 28 | dito | 1-Amino-8-naphthol-3,6-disulfonsäure | 1,4-Diaminobenzol-2-sulfonsäure | (A) | 4-Methoxy-5-(ß-sulfatoäthylsulfonyl)-anilin | grünstichig marineblau |
| 29 | dito | dito | dito | (A) | 2,4-Dimethoxy-5-(ß-sulfatoäthylsulfonyl)-anilin | dito |
| 30 | 2-Aminonaphthalin-3,6-disulfonsäure | dito | 1,3-Diaminobenzol-4-sulfonsäure | (A) | 4-(ß-Sulfatoäthylsulfonyl)-anilin | marineblau |
| 31 | dito | dito | dito | (A) | 4-Vinylsulfonyl-anilin | dito |
| 32 | 2-Aminonaphthalin-5,7-disulfonsäure | dito | dito | (A) | dito | dito |
| 33 | dito | dito | dito | (A) | 4-(ß-Sulfatoäthylsulfonyl)-anilin | dito |
| 34 | 2-Aminonaphthalin-6,8-disulfonsäure | dito | dito | (A) | dito | dito |

| Bsp. | Naphthalin-sulfonsäure (4) | bivalente Kupplungs-komponente | Phenylen-diamin (6) | Cyanur-halogenid | Aminoverbindung (5) | Farbton |
|---|---|---|---|---|---|---|
| 35 | 2-Aminonaphthalin-4,6,8-trisulfon-säure | 1-Amino-8-naphthol-3,6-disulfonsäure | 1,3-Diaminobenzol-4-sulfonsäure | (A) | 4-Vinylsulfonyl-anilin | marineblau |
| 36 | dito | dito | 1,4-Diaminobenzol-2-sulfonsäure | (A) | dito | grünstichig marineblau |
| 37 | 2-Aminonaphthalin-3,6,8-trisulfon-säure | dito | dito | (A) | dito | dito |
| 38 | 2-Aminonaphthalin-4,8-disulfonsäure | dito | dito | (A) | 4-(β-Sulfatoäthylsulfonyl)-anilin | dito |
| 39 | 2-Aminonaphthalin-6,8-disulfonsäure | dito | dito | (A) | dito | dito |
| 40 | 2-Aminonaphthalin-5,7-disulfonsäure | dito | dito | (A) | dito | dito |
| 41 | 2-Aminonaphthalin-3,6-disulfonsäure | dito | dito | (A) | dito | dito |
| 42 | 2-Aminonaphthalin-3,6-disulfonsäure | 1-Amino-8-naphthol-4,6-disulfonsäure | dito | (A) | dito | marineblau |
| 43 | 2-Aminonaphthalin-4,8-disulfonsäure | dito | dito | (A) | dito | dito |
| 44 | 2-Aminonaphthalin-6,8-disulfonsäure | dito | dito | (A) | dito | dito |
| 45 | dito | dito | 1,4-Diaminobenzol-2,6-disulfonsäure | (A) | 4-Vinylsulfonyl-anilin | dito |

| Bsp. | Naphthalin-sulfonsäure (4) | bivalente Kupplungs-komponente | Phenylen-diamin (6) | Cyanur-halogenid | Aminoverbindung (5) | Farbton |
|---|---|---|---|---|---|---|
| 46 | 2-Aminonaphthalin-4,8-disulfonsäure | 1-Amino-8-naphthol-4,6-disulfonsäure | 1,4-Diaminobenzol-2,6-disulfonsäure | (A) | 4-Vinylsulfonyl-anilin | marineblau |
| 47 | 2-Aminonaphthalin-3,6-disulfonsäure | dito | dito | (A) | dito | dito |
| 48 | 1-Aminonaphthalin-4-sulfonsäure | 1-Amino-8-naphthol-3,6-disulfonsäure | 1,3-Diaminobenzol-4-sulfonsäure | (A) | 4-(ß-Sulfatoäthylsulfonyl)-anilin | dito |
| 49 | dito | 1-Amino-8-naphthol-4,6-disulfonsäure | dito | (A) | dito | rotstichig marineblau |
| 50 | dito | dito | 1,4-Diaminobenzol-2-sulfonsäure | (A) | dito | marineblau |
| 51 | dito | 1-Amino-8-naphthol-3,6-disulfonsäure | dito | (A) | dito | grünstichig marineblau |
| 52 | dito | dito | 1,4-Diaminobenzol-2,6-disulfonsäure | (A) | 4-Vinylsulfonyl-anilin | dito |
| 53 | 2-Aminonaphthalin-1-sulfonsäure | dito | dito | (A) | dito | dito |
| 54 | dito | dito | 1,4-Diaminobenzol-2-sulfonsäure | (A) | 4-(ß-Sulfatoäthylsulfonyl)-anilin | dito |
| 55 | dito | 1-Amino-8-naphthol-4,6-disulfonsäure | 1,4-Diaminobenzol-2-sulfonsäure | (A) | dito | marineblau |

| Bsp. | Naphthalin-sulfonsäure (4) | bivalente Kupplungs-komponente | Phenylen-diamin (6) | Cyanur-halogenid | Aminoverbindung (5) | Farbton |
|---|---|---|---|---|---|---|
| 56 | 2-Aminonaphthalin-6-sulfonsäure | 1-Amino-8-naphthol-4,6-disulfonsäure | 1,4-Diaminobenzol-2-sulfonsäure | (A) | 4-(ß-Sulfatoäthylsulfonyl)-anilin | marineblau |
| 57 | dito | dito | 1,4-Diaminobenzol-2,6-disulfonsäure | (A) | dito | dito |
| 58 | dito | 1-Amino-8-naphthol-3,6-disulfonsäure | dito | (A) | dito | grünstichig marineblau |
| 59 | dito | dito | 1,4-Diaminobenzol-2-sulfonsäure | (A) | dito | dito |
| 60 | dito | dito | 1,3-Diaminobenzol-4-sulfonsäure | (A) | dito | marineblau |
| 61 | dito | dito | 1,4-Diaminobenzol-2,5-disulfonsäure | (A) | dito | grünstichig marineblau |
| 62 | 2-Aminonaphthalin-5-sulfonsäure | dito | 1,4-Diaminobenzol-5-sulfonsäure | (A) | dito | dito |
| 63 | 2-Aminonaphthalin-7-sulfonsäure | dito | dito | (A) | dito | dito |
| 64 | 2-Aminonaphthalin-8-sulfonsäure | dito | dito | (A) | dito | dito |
| 65 | 2-Aminonaphthalin-5-sulfonsäure | 1-Amino-8-naphthol-3,6-disulfonsäure | 1,3-Diaminobenzol-4-sulfonsäure | (A) | dito | marineblau |
| 66 | dito | dito | 1,4-Diaminobenzol-2,5-disulfonsäure | (A) | dito | grünstichig marineblau |
| 67 | 2-Aminonaphthalin-6-sulfonsäure | dito | dito | (A) | dito | dito |
| 68 | dito | dito | 1,3-Diaminobenzol-4-sulfonsäure | (A) | dito | marineblau |

| Bsp. | Naphthalinsulfonsäure (4) | bivalente Kupplungskomponente | Phenylendiamin (6) | Cyanurhalogenid | Aminoverbindung (5) | Farbton |
|---|---|---|---|---|---|---|
| 69 | 2-Aminonaphthalin-7-sulfonsäure | 1-Amino-8-naphthol-3,6-disulfonsäure | 1,3-Diaminobenzol-4-sulfonsäure | (A) | 4-(β-Sulfatoäthylsulfonyl)-anilin | marineblau |
| 70 | dito | dito | 1,4-Diaminobenzol-2,6-disulfonsäure | (A) | dito | grünstichig marineblau |
| 71 | 2-Aminonaphthalin-8-sulfonsäure | dito | dito | (A) | dito | dito |
| 72 | dito | dito | 1,3-Diaminobenzol-4-sulfonsäure | (A) | dito | marineblau |
| 73 | 1-Aminonaphthalin-(6,7)-sulfonsäure | dito | dito | (A) | dito | dito |
| 74 | 1-Aminonaphthalin-4,6-disulfonsäure | dito | dito | (A) | dito | dito |
| 75 | 1-Aminonaphthalin-3-sulfonsäure | dito | dito | (A) | dito | dito |
| 76 | 1-Aminonaphthalin-6-sulfonsäure | dito | dito | (A) | dito | dito |
| 77 | 1-Aminonaphthalin-3,6-disulfonsäure | dito | dito | (A) | dito | dito |
| 78 | 1-Aminonaphthalin-3,7-disulfonsäure | dito | dito | (A) | dito | dito |
| 79 | 1-Aminonaphthalin-5,7-disulfonsäure | dito | dito | (A) | dito | dito |
| 80 | 1-Aminonaphthalin-4,6,8-trisulfonsäure | dito | dito | (A) | dito | dito |

| Bsp. | Naphthalin-sulfonsäure (4) | bivalente Kupplungskomponente | Phenylen-diamin (6) | Cyanur-halogenid | Aminoverbindung (5) | Farbton |
|---|---|---|---|---|---|---|
| 81 | 1-Aminonaphthalin-3,5,7-trisulfonsäure | 1-Amino-8-naphthol-3,6 disulfonsäure | 1,3-Diaminobenzol-4-sulfonsäure | (A) | 4-(ß-Sulfatoäthylsulfonyl)-anilin | marineblau |
| 82 | 1-Aminonaphthalin-3,6,8-trisulfonsäure | dito | dito | (A) | dito | dito |
| 83 | 1-Aminonaphthalin-4,7-disulfonsäure | dito | dito | (A) | dito | dito |
| 84 | 2-Aminonaphthalin-1,5-disulfonsäure | dito | 1,4-Diaminobenzol-2-sulfonsäure | (B) | 4-Vinylsulfonyl-anilin | grünstichig marineblau |
| 85 | dito | dito | dito | (B) | 4-(ß-Sulfatoäthylsulfonyl)-anilin | dito |
| 86 | dito | 1-Amino-8-naphthol-4,6-disulfonsäure | dito | (B) | dito | marineblau |
| 87 | dito | dito | dito | (B) | 4-Vinylsulfonyl-anilin | dito |
| 88 | 2-Aminonaphthalin-1-sulfonsäure | 1-Amino-8-naphthol-3,6-disulfonsäure | 1,4-Diaminobenzol-2,5-disulfonsäure | (B) | dito | grünstichig marineblau |
| 89 | dito | dito | 1,4-Diaminobenzol-2,6-disulfonsäure | (B) | dito | dito |
| 90 | dito | dito | dito | (B) | 4-(ß-Sulfatoäthylsulfonyl)-anilin | dito |
| 91 | 1-Aminonaphthalin-4-sulfonsäure | dito | dito | (B) | 4-Vinylsulfonyl-anilin | dito |

## Patentansprüche

1. Wasserlösliche Disazoverbindungen der allgemeinen Formel (1)

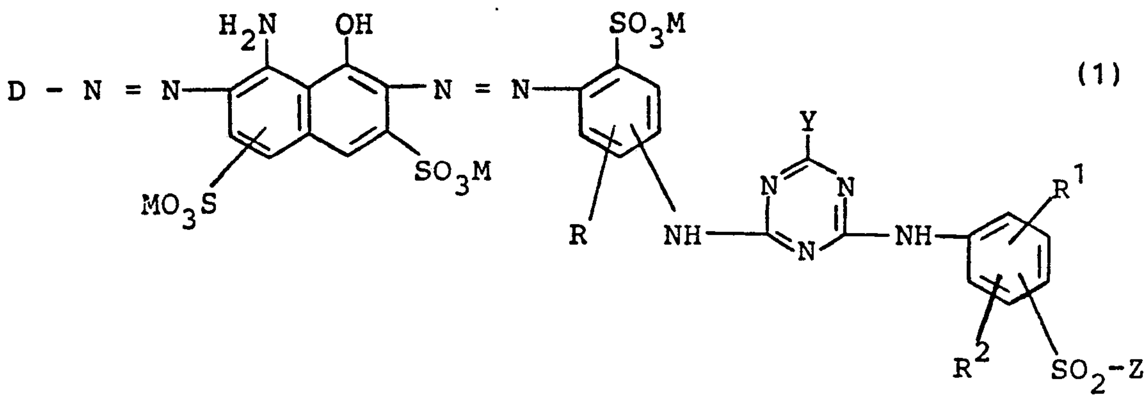

(1)

in welcher bedeuten:
M ist ein Wasserstoffatom oder das Äquivalent eines Metalls;
R ist ein Wasserstoffatom oder eine Alkylgruppe von 1 bis 4 C-Atomen, eine Alkoxygruppe von 1 bis 4 C-Atomen oder eine Sulfogruppe;
D ist ein Rest der Formel (4a)

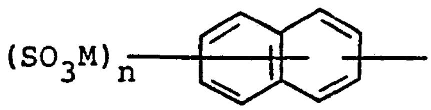

(4a)

in welcher M die obengenannte Bedeutung hat und n für die Zahl 1, 2 oder 3 steht,

wobei jedoch im Falle, daß die Triazinylaminogruppe an den Benzolkern in para-Stellung zur angezeigten Gruppe $-SO_3M$ gebunden ist und R gleichzeitig für ein Wasserstoffatom steht,

D der 3-Sulfo-1-naphthyl-, 4-Sulfo-1-naphthyl-, 6-Sulfo-1-naphthyl-, 7-Sulfo-1-naphthyl-, 3, 6-Disulfo-1-naphthyl-, 3, 7-Disulfo-1-naphthyl-, 4, 6-Disulfo-1-naphthyl-, 4, 7-Disulfo-1-naphthyl-, 5, 7-Disulfo-1-naphthyl-, 3, 5, 7-Tri-sulfo-1-naphthyl-, 3, 6, 8-Trisulfo-1-naphthyl-, 4, 6, 8-Tri-sulfo-1-naphthyl-, 5-Sulfo-2-naphthyl-, 6-Sulfo-2-naphthyl-, 7-Sulfo-2-naphthyl-, 8-Sulfo-2-naphthyl-, 3, 6-Disulfo-2-naphthyl-, 5, 7-Disulfo-2-naphthyl-, 6, 8-Disulfo-2-naphthyl-oder der 4, 6, 8-Trisulfo-2-naphthyl-Rest ist;

die eine Sulfogruppe der Formel $MO_3S$- im Aminonaphtholrest steht in meta- oder para-Stellung zur Aminogruppe an den Naphthalinkern gebunden;

$R^1$ ist ein Wasserstoffatom, eine Alkylgruppe von 1 bis 4 C-Atomen, eine Alkoxygruppe von 1 bis 4 C-Atomen oder ein Chloratom;

$R^2$ ist ein Wasserstoffatom, eine Alkylgruppe von 1 bis 4 C-Atomen, eine Alkoxygruppe von 1 bis 4 C-Atomen oder ein Chloratom;

Y ist ein Chloratom oder ein Fluoratom;

Z ist die Vinylgruppe oder eine β-Sulfatoäthyl-Gruppe.

2. Verbindungen nach Anspruch 1 der allgemeinen Formel

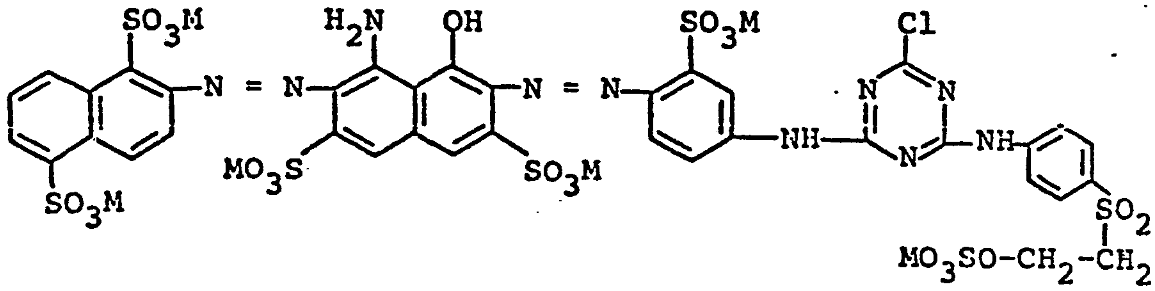

in welcher M die in Anspruch 1 genannte Bedeutung besitzt.

3. Verbindungen nach Anspruch 1 der allgemeinen Formel

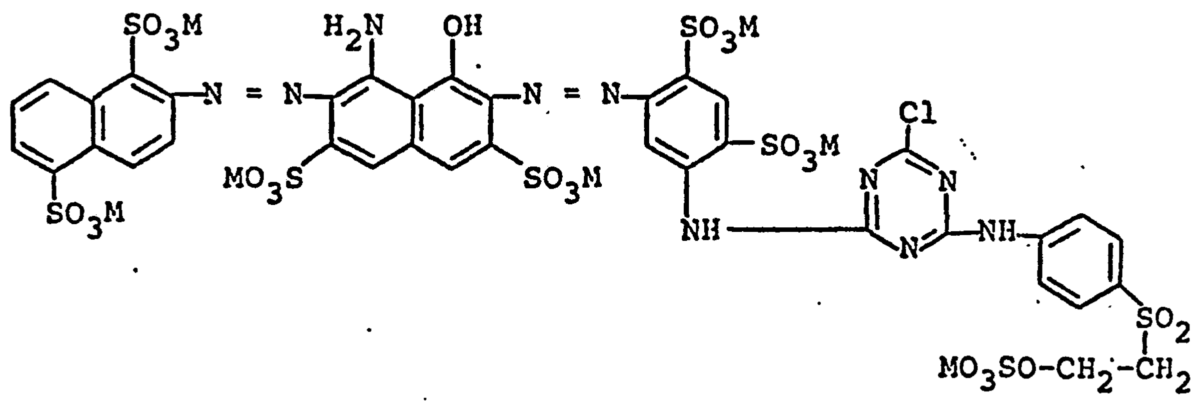

in welcher M die in Anspruch 1 genannte Bedeutung besitzt.

4. Verbindungen nach Anspruch 1 der allgemeine Formel

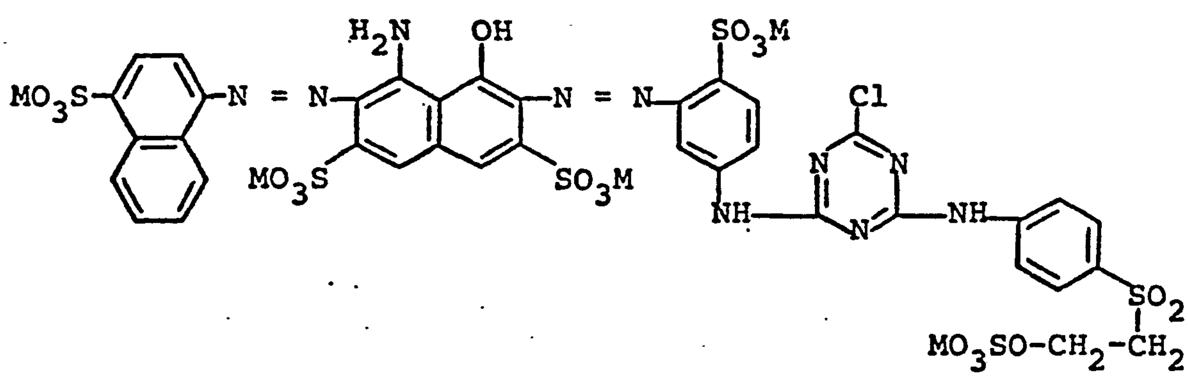

In welcher M die in Anspruch 1 genannte Bedeutung besitzt.

5. Verbindungen nach einem der Ansprüche 1 bis 4 dadurch gekennzeichnet, daß M für Natrium oder Kalium steht

6. Verfahren zur Herstellung der in Anspruch 1 genannten und definierten Verbindungen der allgemeinen Formel (1), dadurch gekennzeichnet, daß man eine Monoazoverbindung der allgemeinen Formel (2)

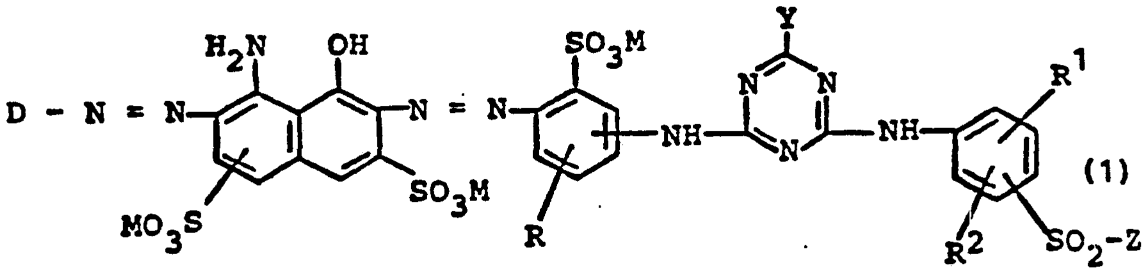

(1)

in welcher D und M die in Anspruch 1 genannten Bedeutungen haben, mit dem Diazoniumsalz einer Aminoverbindung der allgemeinen Formel (3)

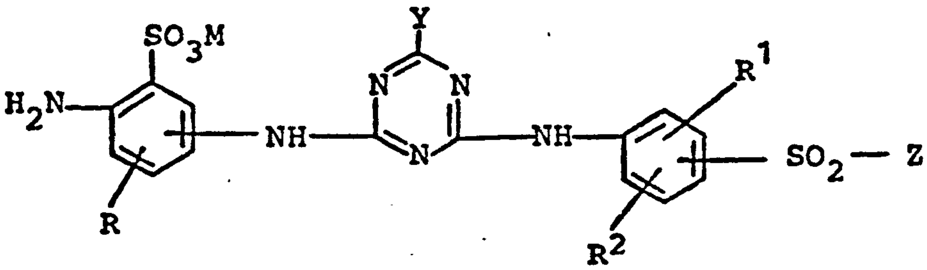

(3)

in welcher M, R, $R^1$, $R^2$, Y und Z die in Anspruch 1 genannten Bedeutungen haben, kuppelt.

7. Verwendung der in Anspruch 1 genannten und definierten Disazoverbindungen der allgemeinen Formel (1) als Farbstoffe.

8. Verwendung nach Anspruch 7 zum Färben von hydroxyund/oder carbonamidgruppenhaltigen Material, insbesondere Fasermaterial.

**Revendications**

1. Composés disazoïques solubles dans l'eau de formule générale (1):

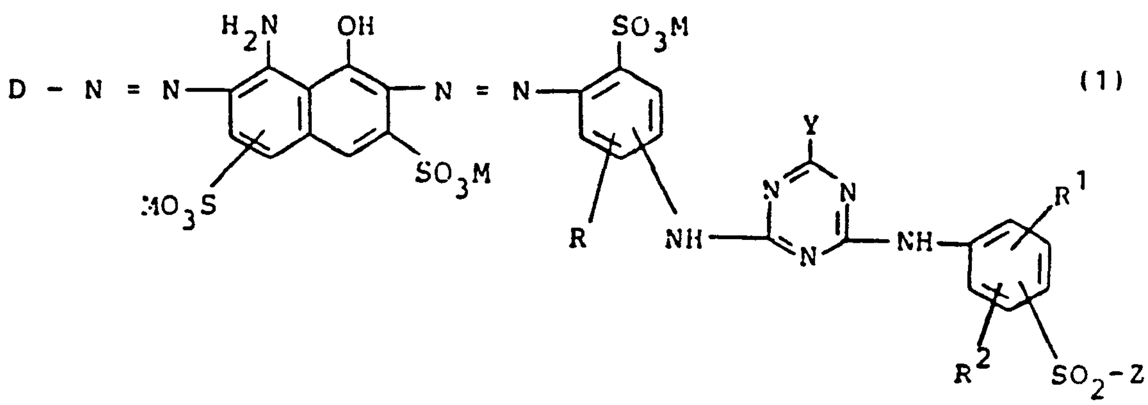

(1)

dans laquelle

M est un atome d'hydrogène ou l'équivalent d'un métal

R un atome d'hydrogène, un alkyle en $C_1$-$C_4$, un alcoxy en $C_1$-$C_4$ ou un groupe sulfo;

D est un radical de formule, (4a):

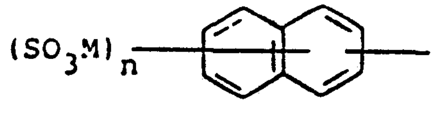

(4a)

M ayant la signification ci-dessus et n étant le nombre 2 ou 3,

mais dans le cas ou le groupe triazinylamino du noyau benzénique est en position para par rapport au groupe $-SO_3M$ et où R est en même temps un atome d'hydrogène, D est le radical 3-sulfo-1-naphtyle, 4-sulfo-1-naphtyle, 6-sulfo-1-naphtyle, 7-sulfo-1-naphtyle, 3, 6-disulfo naphtyle, 3, 7-disulfo-1-naphtyle, 4, 6-disulfo-1-naphtyle, 4, 7-disulfo-1-naphtyle, 5, 7-disulfo-1-naphtyle, 3, 5, 7-tri-sulfo-1-naphtyle, 3, 6, 8-trisulfo-1-naphtyle, 4, 6, 8,-trisul-fo-1-naphtyle, 5-sulfo-2-naphtyle, 6-sulfo-2-naphtyle, 7-sulfo-2-naphtyle, 8-sulfo-2-naphtyle, 3, 6-disulfo-2-naphtyle, 5, 7-disulfo-2-naphtyle, 6, 8-disulfo-2-naphtyle ou 4, 6, 8-tri-sulfo-2-naphtyle;

un groupe sulfo $MO_3S$- du radical d'aminonaphtol est en position méta ou para par rapport au groupe amino sur le noyau naphtalénique;

$R^1$ est un atome d'hydrogène, un alkyle en $C_1$ à $C_4$, un alcoxy en $C_1$ à $C_4$ ou un atome de chlore;

$R^2$ est un atome d'hydrogène, un alkyle en $C_1$ à $C_4$, un alcoxy en $C_1$ à $C_4$ ou un atome de chlore;

Y est un atome de chlore ou de fluor; et

Z le groupe vinyle ou un groupe β-sulfatoéthyle.

2. Composés selon la revendication 1 de formule générale:

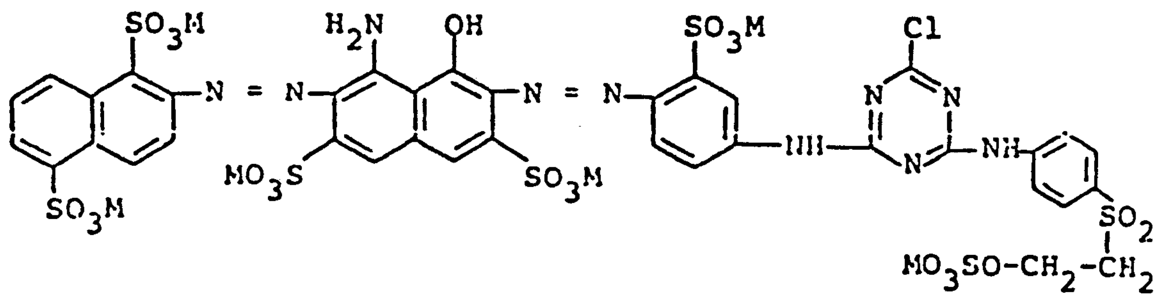

dans laquelle M a la signification donnée à la revendication 1.

3. Composés selon la revendication 1 de formule générale:

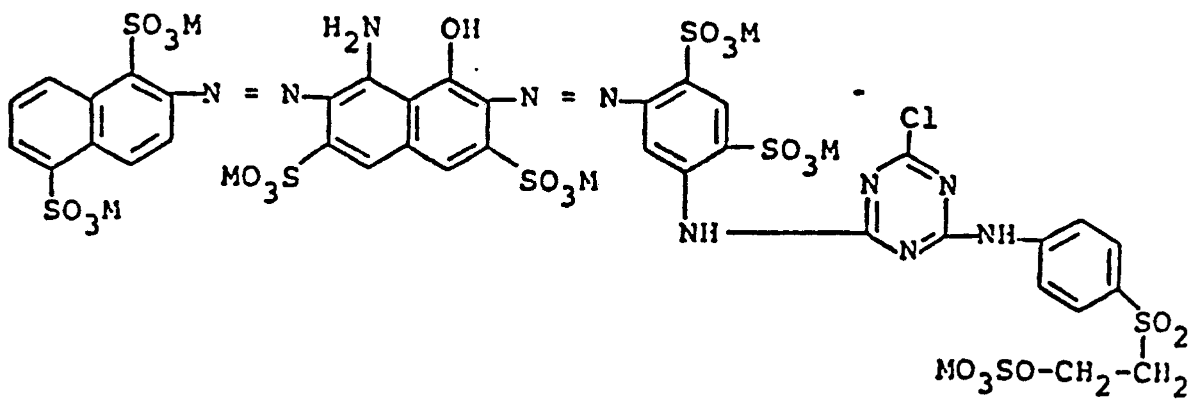

dans laquelle M a la signification donnée revendication 1.

4. Composés selon la revendication 1 de formule générale:

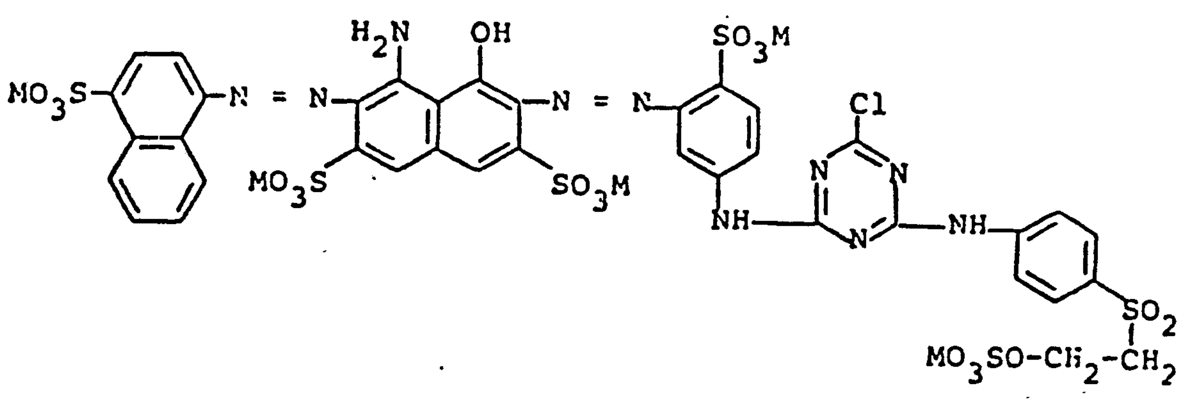

dans laquelle M a la signification donnée à la revendication 1.

5. Composés selon l'une quelconque des revendications 1 à 4 dans lesquels M est le sodium ou le potassium.

6. Procédé de préparation des composés de formule (1) selon la revendication 1, procédé caractérisé en ce que l'on copule un composé monoazoïque de formule générale (2):

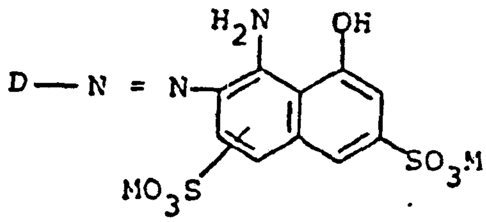

(2)

dans laquelle M et D ont la signification donnée à la revendication 1, avec le sel de diazonium d'un composé aminé de formule générale (3):

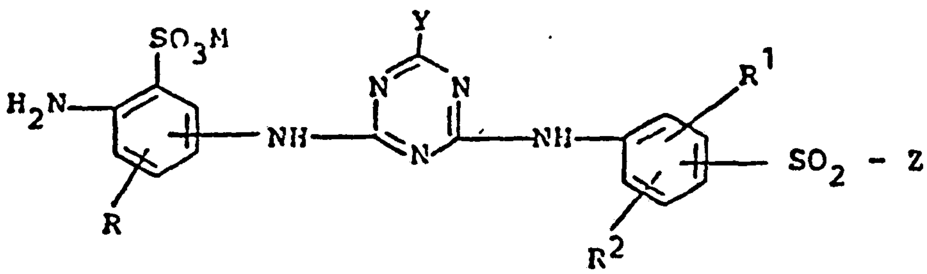

(3)

dans laquelle M, R, $R^1$ $R^2$, Y et Z ont la signification donnée à la revendication 1.

7. Utilisation comme colorants des composés disazoïques de formule générale (1) définie à la revendication 1.

8. Utilisation selon la revendication 7 pour la teinture de matières ayant des groupes hydroxyliques et/ou des groupes carboxamides, en particulier de matières fibreuses.

## Claims

1. Water-soluble disazo compounds of the general formula (1)

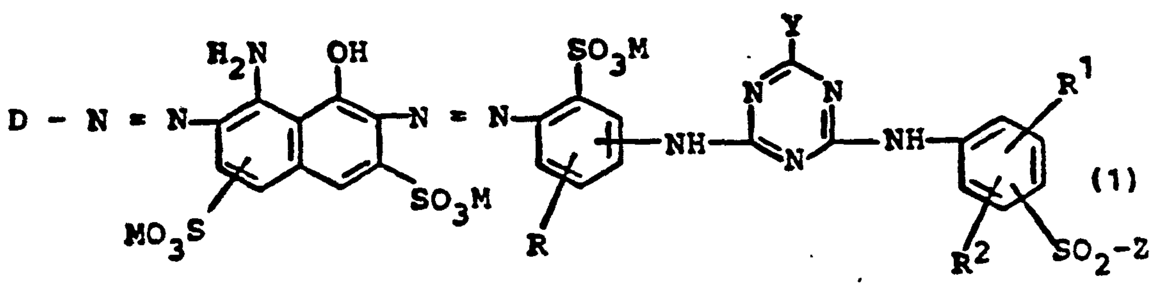

(1)

in which:

M is a hydrogen atom or the equivalent of a metal;

R is a hydrogen atom or an alkyl group of 1 to 4 carbon atoms an alkoxy group of 1 to 4 carbon atoms or a sulfo group;

D is a radical of the formula (4a)

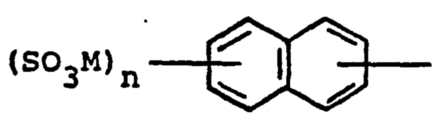

(4a)

in which M has the above-mentioned meaning and n represents the number 1, 2 or 3,

h owever, with the proviso that in the case the triazinylamino group is bonded to the benzene nucleus in paraposition relative to the indicated group $-SO_3M$ and R represents at the same time a hydrogen atom, D is the 3-sulfo-1-naphthyl, 4-sulfo-1-naphthyl, 6-sulfo-1-naphthyl, 7-sulfo-1-naphthyl, 3, 6-disulfo-1-naphthyl, 3, 7-disulfo-1-naphthyl, 4, 6-disulfo-1-naphthyl, 4, 7-disulfo-1-naphthyl, 5, 7-disulfo-1-naphthyl, 3, 5, 7-trisulfo-1-naphthyl, 3, 6, 8-trisulfo-1-naphthyl, 4, 6, 8-trisulfo-1-naphthyl, 5-sulfo-2-naphthyl, 6-sulfo-2-naphthyl, 7-sulfo-2-naphthyl, 8-sulfo-2-naphthyl, 3, 6-disulfo-2-naphthyl, 5, 7-disulfo-2-naphthyl, 6, 8-disulfo-2-naphthyl or the 4, 6, 8-trisulfo-2-naphthyl radical; the sulfo group of the formula $MO_3S$- in the aminonaphthol radical is bonded to the naphthalene nucleus in the meta- or para-position relative to the amino group;

$R^1$ is a hydrogen atom, an alkyl group of 1 to 4 carbon atoms, an alkoxy group of 1 to 4 carbon atoms or a chlorine atom;

$R^2$ is a hydrogen atom, an alkyl group of 1 to 4 carbon atoms, an alkoxy group of 1 to 4 carbon atoms or a chlorine atom;

Y is a chlorine atom or a fluorine atom;

Z is the vinyl group or a β-sulfatoethyl group.

2. Compounds according to claim 1, of the general formula

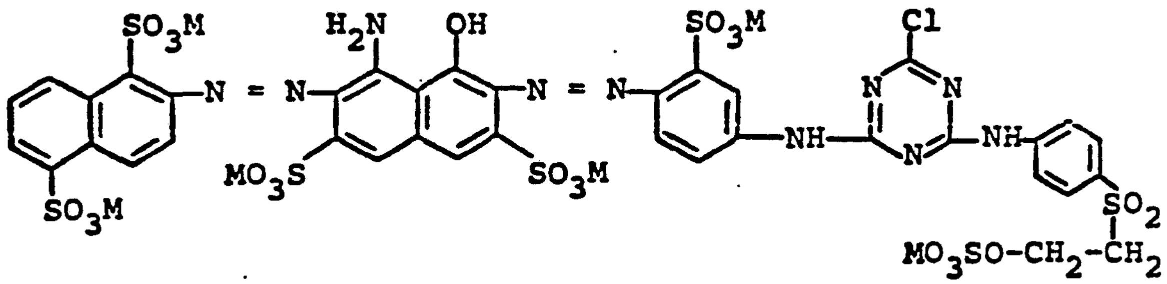

in which M has the meaning given in claim 1.

3. Compounds according to claim 1, of the general formula

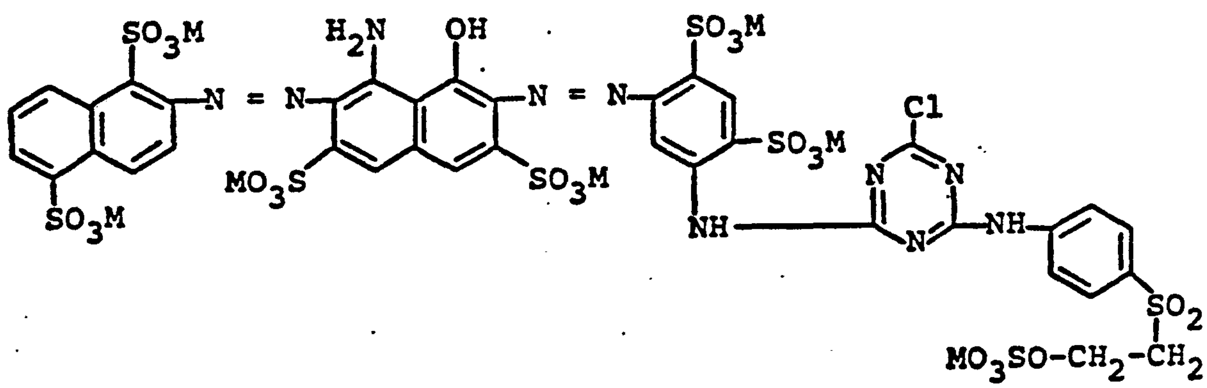

in which M has the meaning given in claim

4. Compounds according to claim 1, of the general formula

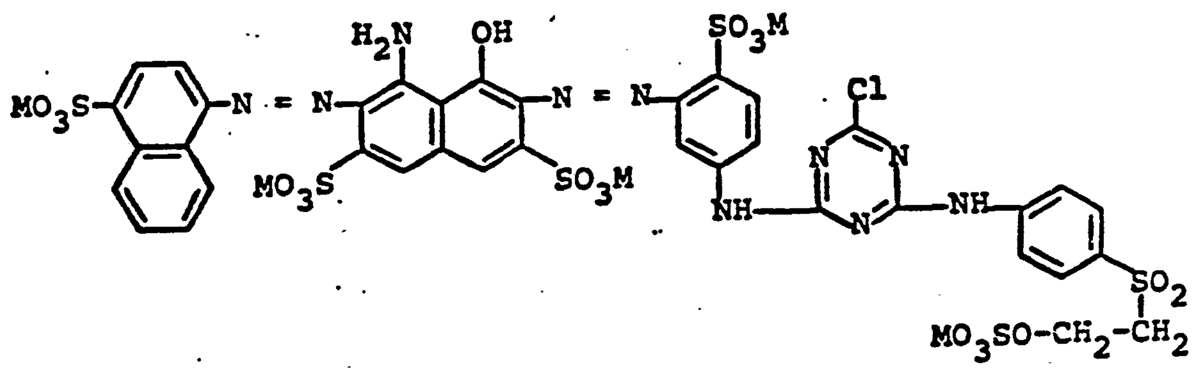

in which M has the meaning given in claim 1.

5. Compounds according to any of claims 1 to 4, in which M represents sodium or potassium.

6. A process for the preparation of the compounds of the general formula (1) mentioned and defined in claim 1, characterized by that a monoazo compound of the general formula (2)

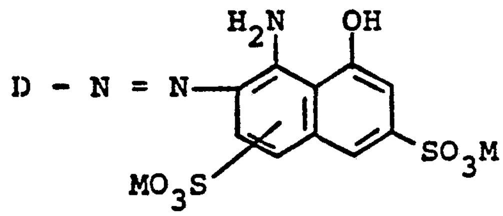

(2)

in which D and M have the meanings given in claim 1, is coupled with the diazonium salt of an amino compound of the general formula (3)

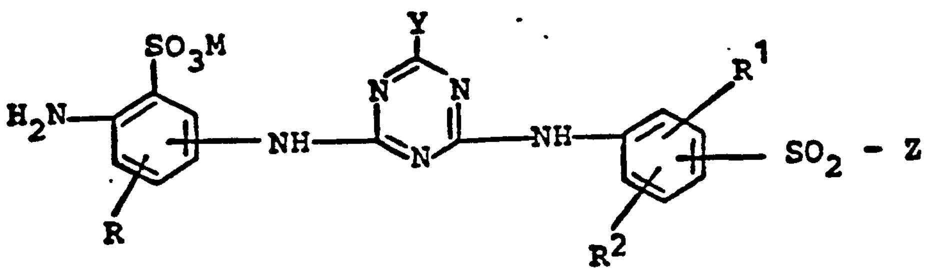

(3)

in which M, R, $R^1$, $R^2$, Y and Z have the meanings given in claim 1.

7. Use of the disazo compounds of the general formula (1) mentioned and defined in claim 1, as dyestuffs.

8. Use according to claim 7 for the colouring of material, in particular fibre material, containing hydroxy and/or carboxanide groups.